Europäisches Patentamt

European Patent Office

Office européen des brevets

(11) Publication number: **0 213 846**
**A2**

## EUROPEAN PATENT APPLICATION

(21) Application number: 86306273.3

(51) Int. Cl.⁴: **H04Q 1/457**

(22) Date of filing: 14.08.86

(30) Priority: 30.08.85 US 771382

(43) Date of publication of application:
**11.03.87 Bulletin 87/11**

(84) Designated Contracting States:
**AT BE CH DE FR GB IT LI LU NL SE**

(71) Applicant: ADVANCED MICRO DEVICES, INC.
901 Thompson Place P.O. Box 3453
Sunnyvale, CA 94088(US)

(72) Inventor: Lange, Arthur
1543 Klamath Avenue
Sunnyvale, Ca. 94087(US)
Inventor: Venkitakrishnan, P.
1235 Wildwood Avenue No. 275
Sunnyvale, Ca. 94087(US)

(74) Representative: Wright, Hugh Ronald et al
Brookes & Martin High Holborn House 52/54
High Holborn
London WC1V 6SE(GB)

(54) Waveform generation method.

(57) A method for the generation of precise single- and dual-tone multiple-frequency signals using only digital signal processing techniques is disclosed. The frequency, amplitude and cadence of the tone(s) generated are programmable via a microprocessor. The tones generated are suitable for the dual-tone multiple-frequency (DTMF) used in communication networks as well as for tone message and tone ringer functions. The principle of operation is that a triangular wave is produced by the repetitive addition of a user-supplied "delta" value to an accumulator until an overflow condition occurs, and then the delta value is repetitively subtracted from the accumulator until an underflow condition occurs. Next, a trapezoidal wave is produced by multiplying the triangular waveform by 1.5 and truncating the resulting waveform at selectable positive and negative levels. The desired amplitude is then established by multiplication by a selectable attenuation value. A DTMF waveform is obtained by generating two waveforms as just described and then summing the resulting waveforms, producing a waveform of a frequency with less than 1% deviation. An exemplary embodiment illustrates the waveform generation method of the present invention in the audio processor section of a digital subscriber controller.

# WAVEFORM GENERATION METHOD

This invention relates to a waveform generation method and in particular to tone generation methods for telecommunication networks and, more particularly, to a method for the precision generation of single-and dual-tone multi-frequency signals using purely digital signal processing techniques.

Reference may be made to our copending European Patent applications 86305537.2 and 86305538.0 and ........ (our file no. A351 corresponding to USSN 771,339) (European Patent numbers ........, ........, and .........)

Generation of tones having a precise frequency and amplitude is a common concern in the electronics arts. For instance, dual-tone sinusoidal signals in the audio frequency range are widely used in telecommunication networks. Known in the prior art are a variety of purely analog techniques, and hybrid digital/analog techniques for generating such tones.

A typical purely analog technique uses a conventional oscillator circuit employing transistors and transformer-coupling with selectable dual tank circuits. Expensive circuit elements must be used to obtain the precise frequencies and amplitudes desired. Moreover, such circuits must be manually fine-tuned and retuned at frequent intervals to maintain accuracy.

To overcome these difficulties the prior art has employed hybrid digital/analog circuitry such as that disclosed in U.S. Patent No. 4,061,886 to Callahan, Jr. et al. A digital-to-analog (D/A) ladder network converts digitally coded signals to analog sine waves and an analog operational amplifier is used to combine the sinusoidal waveforms to provide a dual-tone output signal. The use of D/A ladder circuitry unnecessarily complicates the disclosed apparatus and introduces undesirable imperfections in the signals generated. Also, the waveforms generated are selectable from only a limited hard-wired number of frequencies and amplitudes and cannot be changed without extensive modification of the circuitry.

More importantly, the hybrid apparatus requires circuitry dedicated to the generation of tones, a relatively simple operation for a digital microprocessor to perform. Such digital processors are usually already present within telecommunication equipment and could be used for tone generation without the need for elaborate dedicated circuitry, provided an all-digital technique were available with which to generate dual-tone multi-frequency waveforms with the requisite accuracy.

## SUMMARY OF THE INVENTION

A method for the generation of precise single-and dual-tone multiple-frequency signals using only digital signal processing techniques is disclosed. The frequency, amplitude and cadence of the tone-(s) generated are programmable via a microprocessor. The tones generated are suitable for the dual-tone multiple-frequency (DTMF) used in communication networks as well as for tone message and tone ringer functions.

The principle of operation is that a triangular wave is produced by the repetitive addition of a user-supplied "delta" value to an accumulator until an overflow condition occurs, and then the delta value is repetitively subtracted from the accumulator until an underflow condition occurs. Next, a trapezoidal wave is produced by multiplying the triangular waveform by 1.5 and truncating the resulting waveform at selectable positive and negative levels. The desired amplitude is then established by multiplication by a selectable attenuation value. A DTMF waveform is obtained by generating two waveforms as just described and then summing the resulting waveforms, producing a waveform of a frequency with less than 1% deviation.

An exemplary embodiment illustrates the .waveform generation method of the present invention in the audio processor section of a digital subscriber controller. The audio processor employs a digital signal processor having an arithmetic logic unit which can perform the waveform generation operations described above in their purely digital form. The subscriber controller operates under control of an external microprocessor which can be employed by the user to supply the various parameters, such as frequency and volume, used in the generation of tones.

## BRIEF DESCRIPTION OF THE DRAWINGS

Fig. 1 is a unitary graph of the waveforms of tones generated by the preferred method of the instant invention;

Fig. 2 is a block diagram of the main audio processor (MAP) section 166 of a digital subscriber controller (DSC) 34 employing the preferred novel tone generation method of the instant invention; and

Fig. 3 is a diagrammatic representation of the preferred method of the instant invention to generate dual-tone multi-frequency (DTMF) tones.

## DETAILED DESCRIPTION OF THE PREFERRED EMBODIMENT

The instant invention provides for generation of single tones and dual-tone multi-frequency - (DTMF) signals. The frequency, amplitude and cadence of tone generated are determined by the user. The tones can also be used for tone message and tone ringer functions.

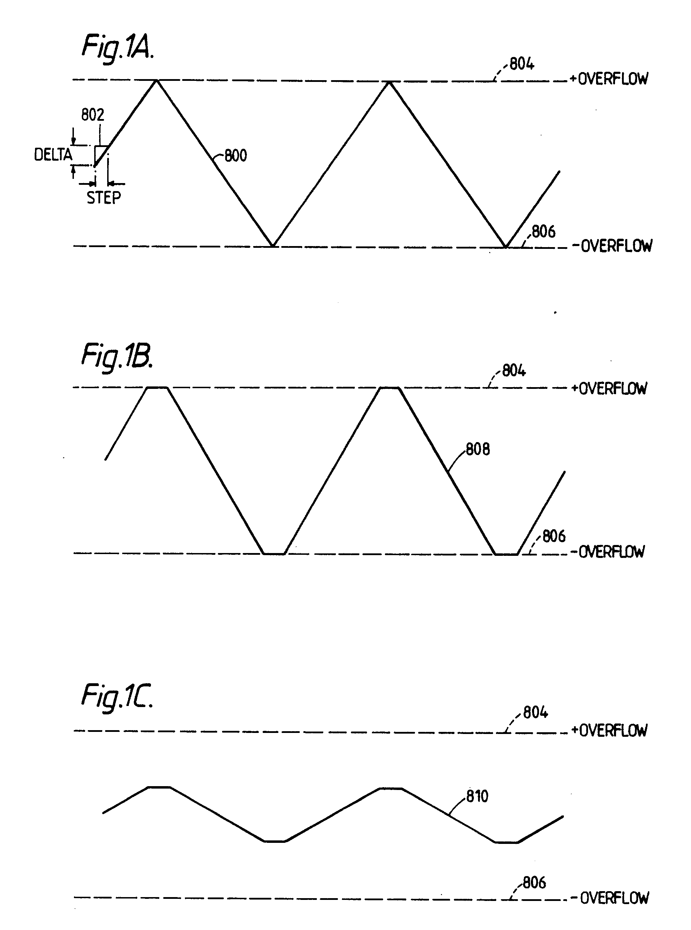

The principle of generating the tones is illustrated in unitary Fig. 1 and will be described in relation to an implementation of a digital subscriber controller ( DSC) 34 described in several related, copending applications. The DSC 34 is the subject of our related co-pending European Patent Application 86305537.2 (Patent No ........).

A detailed description of the DSC 34, other than the programmable multiplexer and the main audio processor, is contained in the above-referenced co-pending application. The multiplexer is the subject of our related co-pending European Patent application No 86305538.0 (Patent No ........).

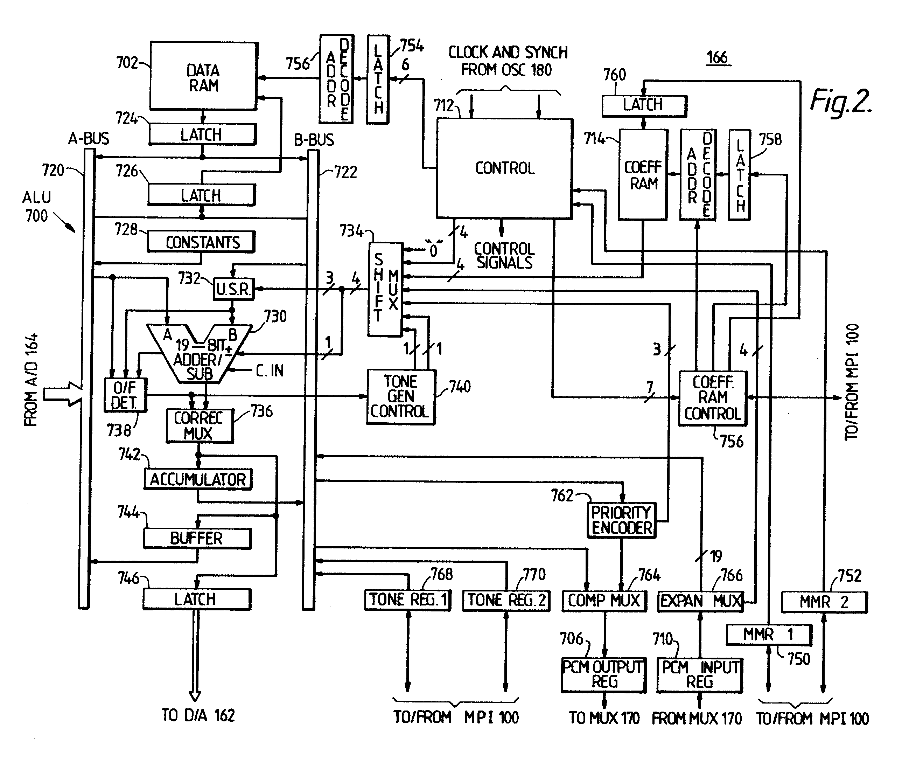

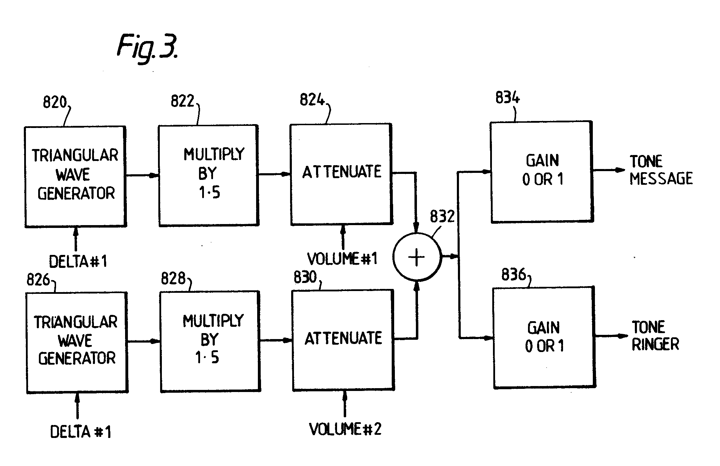

A detailed description of the multiplexer and related elements is contained in the latter co-pending application. These two related, co-pending applications are hereby incorporated by reference. The following description of the tone generation methods of the instant invention refers to Fig. 2, a block diagram of the main audio processor (MAP) section 166 of the DSC 34. A detailed description of the MAP is contained in our related, copending European Patent Application (........ our case A351) which description is hereby incorporated by reference.

As shown in Fig. 1A, a triangular wave 800 is produced by repetitively adding a user-supplied "delta" value 802 to the contents of accumulator 742 (Fig. 2) until a positive overflow condition 804 is detected by overflow detector 738 (Fig. 2). The delta value 802 is then subtracted until a negative overflow (underflow) condition 806 is detected.

With reference to Fig. 1B, the triangular waveform 800 is multiplied by 1.5 and truncated at the overflow 804 and underflow 806 levels to produce the trapezoidal waveform 808. The factor 1.5 produces a 33% risetime in the waveform in which the total harmonic distortion is less than 1/4 of 1%. Finally,a a waveform 810 with the desired tone volume is generated based upon a user-selected amplitude coefficient with which the trapezoidal waveform 808 is multiplied, as shown in Fig. 1C.

A dual-tone multi-frequency waveform can be generated by applying the scheme described in connection with Fig. 1 so as to generate a pair of waveforms. As shown in Fig. 3, a first triangular waveform is generated by generator block 820 which is based upon a first user-selected delta value which is stored in tone register 1 768. This waveform is multiplied by 1.5 within block 822 and attenuated by a first user-selected volume value which is stored in the coefficient RAM 714 within a block 824. A second triangular waveform is generated by generator block 826 which is based upon a second user-selected delta value which is stored on tone register 2 770. This waveform is multiplied by 1.5 within block 828 and attenuated by a second user-selected volume value which is stored in coefficient RAM 714 within a block 830. The two waveforms generated by blocks 824 and 830 are summed within a block 832 to form a dual-tone multi-frequency (DTMF) signal. A block 834 which receives the DTMF signal can be set to a gain of one, and a second block 836 which also receives the DTMF signal can be set to a gain of zero, indicating that the waveform generated by blocks 820, 822 and 824 will be used to produce a tone message signal and the blocks 826, 828 and 830 will be idled, or block 834 can be set to a gain of zero and second block 836 to a gain of one, indicating that the waveform generated by blocks 826, 828 and 830 will be used to produce a tone ringer signal and the blocks 820, 822 and 824 will be idled.

By detecting as positive overflow any result generated by the 19-bit adder/subtractor 730 which exceeds 4096, and as negative overflow any result which is less than -4096, a full scale range of 8192 is obtained between the + overflow and the - overflow values shown in Figs. 1A and 1B. By performing the repetitive addition and subtraction operations within the adder/subtractor 730 at a rate of 128 kilo-cycles per second (128 KHz), the frequencies shown in Table I, below, generates a tone with less than 1% deviation.

TABLE I

_DTMF Signal Generation_

| Nominal Freq.(Hz) | True Divisor | Steps/Cycle | Actual Freq.(Hz) |
|---|---|---|---|
| 697 | 183.64 | 184 | 695.65 |
| 770 | 166.23 | 166 | 771.08 |
| 852 | 150.23 | 150 | 853.33 |
| 941 | 136.03 | 136 | 941.18 |
| 1209 | 105.87 | 106 | 1207.55 |
| 1336 | 95.81 | 96 | 1333.33 |
| 1477 | 86.66 | 86 | 1488.37 |
| 1633 | 78.38 | 78 | 1641.03 |

To obtain the nominal frequency shown in the first column of Table I, the 128 KHz addition/subtraction rate would be divided by the value shown in the second column of the Table I, and the even integral value nearest that in column two is shown in the third column of the Table. This latter value corresponds to the number of steps during the generation of a single tone cycle in which the delta value 802 is added or subtracted. The resulting frequency actually generated is shown in the fourth column of the Table.

Table II, below, indicates the required delta value for a particular number of steps. The delta value is specified in terms of a unit of which there are 8192 for the full scale range between + overflow and -overflow shown in Fig. 1A and 1B. One half of a tone cycle corresponds to the 8192 units of the full scale range, so the number of steps shown in the first column of a particular row of Table II corresponds to the row in Table I, above, in which twice as many steps are indicated. The true delta size shown in the second column of Table II is that value which would produce a triangular waveform having an amplitude exactly equal to the full scale values. The delta value shown in the third column of Table II is the integral value nearest that shown in column two and the resulting number of actual steps required to produce overflow is shown in column four of Table II.

TABLE II

_Step and Delta Selection for DTMF Signal Generation_

| Steps | True Delta Size | Delta | Actual Steps |
|---|---|---|---|
| 92 | 89.04 | 90 | 91.02 |
| 83 | 98.07 | 99 | 82.75 |
| 75 | 109.23 | 110 | 74.47 |
| 68 | 120.47 | 121 | 67.70 |
| 53 | 154.47 | 155 | 52.85 |
| 48 | 170.67 | 171 | 47.91 |
| 43 | 190.51 | 191 | 42.89 |
| 39 | 210.05 | 211 | 38.82 |

Other aspects of the DSP 166 of the instant invention are illustrated by the generation of the tone ringer and tone message tones. Repetitive addition and subtraction operations are performed within the adder/subtractor 730 at a rate of 16 KHz to produce a tone with a nominal frequency listed in the first column of Table III, below.

TABLE III

Tone Ringer, Tone Message Signal Generation

| Nominal Freq.(Hz) | True Divisor | Steps | True Delta Size | Scaled Delta | Actual Steps | True Delta |
|---|---|---|---|---|---|---|
| 2666.67 | 6 | 3 | 2730.67 | 2736 | 2.99 | 171 |
| 2000.00 | 8 | 4 | 2048.00 | 2064 | 3.97 | 129 |
| 1600.00 | 10 | 5 | 1638.40 | 1648 | 4.97 | 103 |
| 1333.33 | 12 | 6 | 1365.33 | 1376 | 5.95 | 86 |
| 1142.86 | 14 | 7 | 1170.29 | 1184 | 6.92 | 74 |
| 1000.00 | 16 | 8 | 1024.00 | 1040 | 7.88 | 65 |
| 888.89 | 18 | 9 | 910.22 | 912 | 8.98 | 57 |
| 800.00 | 20 | 10 | 819.20 | 832 | 9.85 | 52 |
| 727.27 | 22 | 11 | 744.73 | 752 | 10.89 | 47 |
| 666.67 | 24 | 12 | 682.67 | 688 | 11.91 | 43 |
| 615.38 | 26 | 13 | 630.15 | 640 | 12.80 | 40 |
| 571.43 | 28 | 14 | 585.14 | 592 | 13.84 | 37 |
| 533.33 | 30 | 15 | 546.13 | 560 | 14.63 | 35 |
| 500.00 | 32 | 16 | 512.00 | 528 | 15.52 | 33 |
| 470.59 | 34 | 17 | 481.88 | 496 | 16.52 | 31 |
| 444.44 | 36 | 18 | 455.11 | 464 | 17.66 | 29 |
| 421.05 | 38 | 19 | 431.16 | 432 | 18.96 | 27 |
| 400.00 | 40 | 20 | 409.60 | 416 | 19.69 | 26 |
| 380.95 | 42 | 21 | 390.10 | 400 | 20.48 | 25 |
| 363.64 | 44 | 22 | 372.36 | 384 | 21.33 | 24 |
| 347.83 | 46 | 23 | 356.17 | 368 | 22.26 | 23 |
| 333.33 | 48 | 24 | 341.33 | 352 | 23.27 | 22 |
| 320.00 | 50 | 25 | 327.68 | 336 | 24.38 | 21 |

The 16 KHz addition/subtraction rate would be divided by the value shown in the second column of the Table III, the even integral value nearest that in column two is shown in the third column of the Table. This latter value corresponds to the number of steps during the generation of a single tone cycle in which the delta value 802 is added or subtracted. The required delta value (upwardly scaled by a factor of 16) for a particular number of steps is shown in column four of the Table. Because of their storage in registers having a capacity of eight bits, the delta values must be upwardly scaled so as to utilize the full scale range of 8192 provided by the + overflow and -overflow values detected by overflow detector 738. The true delta value shown in the fifth column of Table III is the value which corresponds to the waveform having an amplitude equal to the full scale values.

## Claims

1. A method of generating a waveform having a nominal frequency F and an amplitude A, comprising the steps:

a) repetitively adding a predetermined value, D, to itself at predetermined intervals, S, until said sum exceeds said value A;

b) repetitively subtracting said predetermined value D from said value formed during step (a) at said predetermined intervals, S, until said difference is less than -A;

c) returning to step (a);

d) multiplying said waveform generated in steps (a), (b) and (c) by a predetermined value, M;

e) truncating said waveform generated in step (d) at A whenever it exceeds said value A and at -A whenever it is less than -A; and

f) multiplying said waveform generated in step (e) by a predetermined value, V.

2. A waveform generation method according to claim 1 employing a predetermined base frequency B, and wherein step (a) further calls for determining said values D and S from said frequency F by performing the steps:

(a1) dividing B by F;

(a2) rounding said quotient determined in step (a1) to the nearest even whole number said rounded quotient being S;

(a3) dividing $2^*A$ by S/2; and

(a4) increasing said quotient determined in step (a3) to the next whole number, said increased quotient being D.

3. A waveform generation method according to claim 1 wherein said frequency F is chosen from a range between 300 cycles per second (Hz) and 2666 Hz.

4. A waveform generation method according to claim 1 wherein said predetermined value M is 1.5.

5. A method of generating a dual-tone multi-frequency waveform having a first frequency $F_1$ and a first amplitude $A_1$ and a second frequency $F_2$ and a second amplitude $A_2$, comprising the steps:

a) repetitively adding a predetermined value, $D_1$, to itself at predetermined intervals, $S_1$, until said sum exceeds said value $A_1$;

b) repetitively subtracting said predetermined value D from said value formed during step (a) at said predetermined intervals, $S_1$, until said difference is less than $-A_1$;

c) returning to step (a);

d) multiplying said waveform generated in steps (a), (b) and (c) by a predetermined value, $M_1$;

e) truncating said waveform generated in step (d) at $A_1$ whenever it exceeds said value $A_1$ and at $-A_1$ whenever it is less than $-A_1$;

f) multiplying said waveform generated in step (e) by a predetermined value, $V_1$;

g) repetitively adding a predetermined value, $D_2$, to itself at predetermined intervals, $S_2$, until said sum exceeds said value $A_2$;

h) repetitively subtracting said predetermined value $D_2$ from said value formed during step (g) at said predetermined intervals, $S_2$, until said difference is less than $-A_2$;

i) returning to step (g);

j) multiplying said waveform generated in steps (g), (h) and (i) by a predetermined value, $M_2$;

k) truncating said waveform generated in step (j) at $A_2$ whenever it exceeds said value $A_2$ and at $-A_2$ whenever it is less than $-A_2$;

l) multiplying said waveform generated in step (k) by a predetermined value, $V_2$; and

m) summing said waveforms generated at steps (f) and (l).

6. A waveform generation method according to claim 5 employing a predetermined base frequency B, and wherein step (a) further calls for determining said values $D_1$ and $S_1$ from said frequency $F_1$ by performing the steps:

(a1) dividing B by $F_1$;

(a2) rounding said quotient determined in step (a1) to the nearest even whole number said rounded quotient being $S_1$;

(a3) dividing $2^*A_1$ by $S_1/2$; and

(a4) increasing said quotient determined in step (a3) to the next whole number, said increased quotient being $D_1$.

7. A waveform generation method according to claim 5 employing a predetermined base frequency B, and wherein step (a) further calls for determining said values $D_2$ and $S_2$ from said frequency $F_2$ by performing the steps:

(a1) dividing B by $F_2$;

(a2) rounding said quotient determined in step (a1) to the nearest even whole number said rounded quotient being $S_2$;

(a3) dividing $2^*A_2$ by $S_2/2$; and

(a4) increasing said quotient determined in step (a3) to the next whole number, said increased quotient being $D_2$.

8. A waveform generation method according to claim 5 wherein said frequency $F_1$ is chosen from a range between 697 cycles per second (Hz) and 1633 Hz.

9. A waveform generation method according to claim 5 wherein said frequency $F_2$ is chosen from a range between 697 cycles per second (Hz) and 1633 Hz.

10. A waveform generation method according to claim 5 further including a method for generating tone message and tone ringer waveforms wherein one of said predetermined values $V_1$ and $V_2$ is zero.

11. A waveform generation method according to claim 5 wherein said predetermined values $M_1$ and $M_2$ are 1.5.

*Fig.1A.*

804 ---- +OVERFLOW

802

DELTA

800

STEP

806 -OVERFLOW

*Fig.1B.*

804 ---- +OVERFLOW

808

806 -OVERFLOW

*Fig.1C.*

804 +OVERFLOW

810

806 -OVERFLOW

Fig.2.

Fig.3.